(19)

Europäisches
Patentamt
European
Patent Office
Office européen
des brevets

(11)  **EP 3 125 601 A1**

(12)  **EUROPEAN PATENT APPLICATION**
published in accordance with Art. 153(4) EPC

(43) Date of publication:
**01.02.2017 Bulletin 2017/05**

(21) Application number: **14887114.8**

(22) Date of filing: **28.03.2014**

(51) Int Cl.:
***H04W 24/04*** (2009.01)

(86) International application number:
**PCT/CN2014/074272**

(87) International publication number:
**WO 2015/143704 (01.10.2015 Gazette 2015/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Fujitsu Limited
Kawasaki-shi, Kanagawa 211-8588 (JP)**

(72) Inventors:
• **CHANG, Ningjuan
Beijing 100025 (CN)**

• **WANG, Weiwei
Beijing 100025 (CN)**
• **LU, Yanling
Beijing 100025 (CN)**
• **XU, Haibo
Beijing 100025 (CN)**

(74) Representative: **Cooper-Rolfe, Elizabeth Louise
Haseltine Lake LLP
Lincoln House, 5th Floor
300 High Holborn
London WC1V 7JH (GB)**

(54)  **PARAMETERS MEASUREMENT DEVICE, BASE STATION AND COMMUNICATION SYSTEM**

(57)    Embodiments of the present disclosure provide a parameter measuring apparatus, a base station and communication system. The parameter measuring apparatus includes: a measuring unit configured to measure a related parameter; where measurement of a split bearer is excluded or not excluded when the related parameter is measured. Corresponding L2 measurement is performed according to a situation of the split bearer, which enables accurate L2 measurement to be performed in a dual-connectivity scenario where there exists a split bearer, thereby providing efficient support to network administration and maintenance.

Fig.7

EP 3 125 601 A1

## Description

Technical Field

The present disclosure relates to the field of communications, and in particular to a parameter measuring apparatus, a base station and communication system.

Background

In a long-term evolution (LTE) system, an air-interface user-plane protocol stack includes a layer 1 (L1) and a layer 2 (L2).

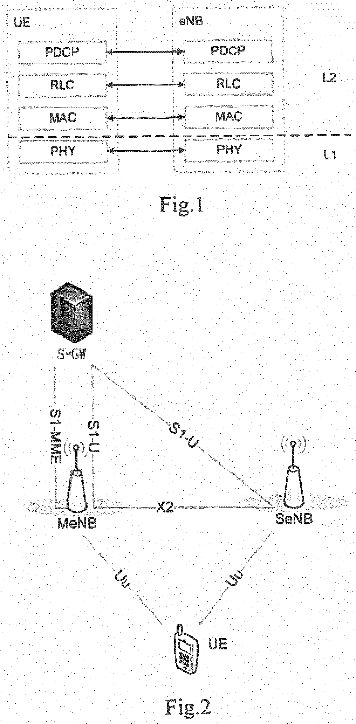

FIG. 1 is a schematic diagram of a structure of an air-interface user-plane protocol stack in an existing LTE system. As shown in FIG 1, L1 is a physical (PHY) layer, and L2 includes a packet data convergence protocol (PDCP) layer, a radio link control (RLC) layer and a medium access control (MAC) layer.

Currently, in order to support radio link operation, radio resource administration, network operation and maintenance and organizing/optimizing a network of evolved universal terrestrial radio access (E-UTRA), a base station (such as an eNB) needs to perform L2 measurement, that is, related parameters concerned by L2 are measured.

In a heterogeneous network where small cells are deployed, a dual connectivity (DC) technology is adopted to improve throughput of user equipment (UE), enhance movement robustness and lower network signaling overhead, etc.

FIG 2 is a schematic diagram of a systematic architecture of a network configured with the DC technology. As shown in FIG 2, an eNB may configure dual connectivity for UE in a connected state and having a function of multiple receiving and transmission. When the dual connectivity is configured, two different eNBs are used to provide radio resources for the UE for performing data transmission, the two eNBs being connected via a nonideal backhaul X2 interface.

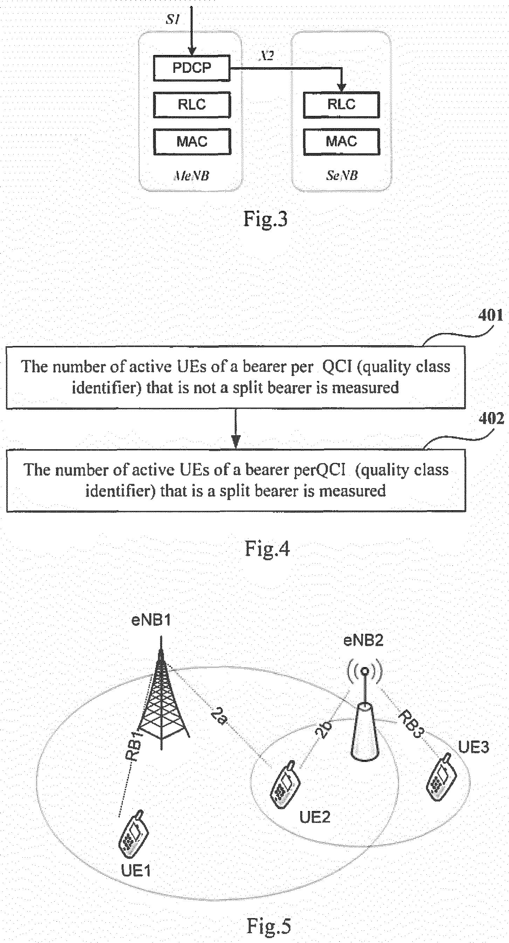

In an E-UTRA network, a bearer refers to a data transmission path and its configuration, different bearers having different configuration for being used for transmitting traffics having different demands for quality of service (QoS). And a bearer in a radio interface is referred to as a radio bearer (RB); wherein, a user-plane bearer is referred to as a data radio bearer (DRB). A type of bearer exists in UE configured with the dual connectivity, which is referred to as a split bearer. FIG 3 is a schematic diagram of the split bearer. As shown in FIG 3, from an angle of a protocol stack, the split bearer refers to use resources of two eNBs at the same time, and a radio protocol stack to which it corresponds exists also in the two eNBs.

It should be noted that the above description of the background is merely provided for clear and complete explanation of the present disclosure and for easy understanding by those skilled in the art. And it should not be understood that the above technical solution is known to those skilled in the art as it is described in the background of the present disclosure.

Summary

Currently, in a case where dual connectivity is configured, for a split bearer of a QoS attribute being a QCI, as data transmission in the split bearer occurs at two different network sites at the same time, it is split from a PDCP layer of a master eNB (MeNB), and no PDCP layer exists in a secondary eNB (SeNB), for such type of split bearer, inapplicability or inaccuracy exists in the current L2 measurement manner. For example, in measuring a related parameter, such as a downlink scheduling IP throughput, the number of bits of a PDCP service data unit (SDU) is measured; however, for the split bearer, as no PDCP layer exists in the secondary eNB, the secondary eNB is unable to measure the number of bits of the PDCP SDU.

Embodiments of the present disclosure provide a parameter measuring apparatus, a base station (such as an eNB) and a communication system, which enable accurate measurement of related parameters to be performed in a dual-connectivity scenario where there exists a split bearer, thereby providing efficient support to network administration and maintenance.

According to a first aspect of the embodiments of the present disclosure, there is provided a parameter measuring apparatus, including:

    a measuring unit configured to measure a related parameter; wherein measurement of a split bearer is excluded or not excluded when the related parameter is measured.

According to a second aspect of the embodiments of the present disclosure, there is provided a base station, including the parameter measuring apparatus as described in the first aspect.

According to a third aspect of the embodiments of the present disclosure, there is provided a communication system, including at least two base stations, and multiple UEs connected to the base stations in a single connectivity manner or a dual connectivity manner; wherein,

the base stations are configured to measure a related parameter; and wherein measurement of a split bearer is excluded or not excluded when the related parameter is measured by the base stations.

An advantage of the embodiments of the present disclosure exists in that corresponding measurement is performed according to a situation of the split bearer, which enables accurate measurement to be performed in a dual-connectivity scenario where there exists a split bearer, thereby providing efficient support to network administration and maintenance.

With reference to the following description and drawings, the particular embodiments of the present disclosure are disclosed in detail, and the principles of the present disclosure and the manners of use are indicated. It should be understood that the scope of embodiments of the present disclosure is not limited thereto. Embodiments of the present disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

Brief Description of the Drawings

The drawings are included to provide further understanding of the present disclosure, which constitute a part of the specification and illustrate the preferred embodiments of the present disclosure, and are used for setting forth the principles of the present disclosure together with the description. It is obvious that the accompanying drawings in the following description are some embodiments of the present disclosure only, and a person of ordinary skill in the art may obtain other accompanying drawings according to these accompanying drawings without making an inventive effort. In the drawings:

FIG. 1 is a schematic diagram of a structure of an air-interface user-plane protocol stack in an existing LTE system;
FIG 2 is a schematic diagram of a systematic architecture of a network configured with the DC technology;
FIG 3 is a schematic diagram of a split bearer;
FIG 4 is a flowchart of the measurement method of Embodiment 1 of the present disclosure;
FIG 5 is a schematic diagram of a systematic structure of the communication system of Embodiment 1 of the present disclosure;
FIG 6 is a schematic diagram of a protocol stack architecture corresponding to FIG. 5;
FIG 7 is a schematic diagram of a structure of the parameter measuring apparatus of Embodiment 3 of the present disclosure; and
FIG 8 is a schematic diagram of a structure of the base station of Embodiment 5 of the present disclosure.

Detailed Description

These and further aspects and features of the present disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims. Various embodiments of the present disclosure shall be described below with reference to the accompanying drawings. These embodiments are illustrative only, and are not intended to limit the present disclosure.

In a heterogeneous network where small cells are deployed, in a scenario where dual connectivity is configured, the system includes multiple UEs and at least two base stations (such as eNBs), such as a first base station and a second base station participating in a dual connectivity operation; wherein, part of the UEs are connected to the first base station and second base station in a dual connectivity manner, and furthermore, part of the UEs is connected to the first base station or the second base station in a conventional manner, i.e. a single connectivity manner.

The embodiments of the present disclosure provide a parameter measuring method and an apparatus, base station and communication system thereof. The method includes: excluding or not excluding measurement of a split bearer when a related parameter is measured. With the method of the embodiment of the present disclosure, accurate measurement of the related parameter may be performed in a dual-connectivity scenario where there exists a split bearer, thereby providing efficient support to network administration and maintenance.

In this embodiment, the related parameter may be a related parameter concerned by L2, which may include but not be limited to one or more of the following parameters:

1) number of active UEs in the DL per QCI;
2) number of active UEs in the UL per QCI;
3) packet delay in the DL per QCI;
the packet delay refers to average delay experienced in successfully receiving packets in the DL per QCI one packet by one packet;
4) packet loss rate in the DL per QCI;
the packet loss rate refers to a probability of loss of packets in the DL per QCI that have not been transmitted in a radio link due to congestion, etc.;
5) packet Uu loss rate in the DL per QCI;
the packet Uu loss rate refers to a probability of loss of packets in the DL per QCI that have been transmitted at a Uu interface (an air interface) but the transmission is unsuccessful due to a poor channel condition, etc.;
6) packet loss rate in the UL per QCI;
the packet loss rate refers to a probability of loss of packets in the UL per QCI due to a poor channel condition, etc.;
7) scheduled IP throughput in DL;
the throughput refers to a data bit rate of successful transmission of packets per QCI to which UE in the DL corresponds;
8) scheduled IP throughput in UL;
the throughput refers to a data bit rate of successful transmission of packets per QCI to which UE in the UL corresponds.

In this embodiment, when the base stations measure related parameters, such as above parameters 1) -8), measurement of a split bearer per QCI may be excluded, such as excluding measurement of a part in the split bearer belonging to a master cell group (MCG) and/or a part belong to a secondary cell group (SCG), or measurement of the split bearer is not excluded, such as measuring a part belonging to the master cell group (MCG) and a part belonging to the secondary cell group (SCG) in the split bearer, respectively or uniformly, or related parameters of the split bearer and related parameters of a bearer that is not the split bearer are respectively measured.

In this embodiment, when there exists a split bearer, the base stations may perform measurement by using any one of the above manners, and measurement manners used by different base stations may be identical or different.

The parameter measuring method and apparatus, the base station and the communication system of embodiments of the present disclosure shall be described below with reference to the accompanying drawings.

Embodiment 1

Embodiment 1 of the present disclosure provides a parameter measuring method, including: not excluding measurement of a split bearer when a related parameter is measured.

It can be seen from the above embodiment that the related parameter is measured according to a situation of the split bearer, which may obtain an accurate measurement result, thereby providing efficient support to network administration and maintenance.

In this embodiment, when the measurement of the split bearer is not excluded, a base station respectively measures the related parameter of a bearer per QCI that is not a split bearer and the related parameter of a bearer per QCI that is a split bearer. For example, when the related parameter is the above parameter 1) or 2), the above method may be used for the measurement.

FIG. 4 is a flowchart of the measurement method of Embodiment 1 of the present disclosure. As shown in FIG 4, the method includes:

Step 401: the number of active UEs of a bearer per QCI (quality class identifier) that is not a split bearer is measured; and

Step 402: the number of active UEs of a bearer per QCI (quality class identifier) that is a split bearer is measured.

In the above embodiment, an order of execution of the steps is not limited, and step 402 may be executed first, then step 401 is executed, or steps 401 and 402 may be executed at the same time.

It can be seen from the above embodiment that by respectively measuring the number of active UEs of a bearer that is not a split bearer and the number of active UE of a bearer that is a split bearer, accurate L2 measurement may be performed in a dual-connectivity scenario where there exists a split bearer, thereby providing efficient support to network administration and maintenance.

In this embodiment, when the related parameter is above parameter 1) number of active UEs in the DL per QCI, Formula (1) may be used to determine the number of active UEs in the DL per QCI of a bearer that is not a split bearer, and Formula (2) may be used to determine the number of active UEs in the DL per QCI of a bearer that is a split bearer.

$$M_1(T,qci,p) = \left\lfloor \frac{\sum_{\forall i} N_1(i,qci)}{I_1(T,p)} \right\rfloor \qquad (1),$$

$$M_2(T,qci,p) = \left\lfloor \frac{\sum_{\forall i} N_2(i,qci)}{I_2(T,p)} \right\rfloor \qquad (2);$$

where, $M_1(T,qci,p)$ is the number of active UEs per $QCI$ = qci of a bearer that is not a split bearer, $N_1(i,qci)$ is the number of UEs per $QCI$ = qci of a bearer that is not a split bearer and where there exist L2 DL buffer data at a measurement sampling time point i (referred to as a sampling point i herein and hereinafter), $M_2(T,qci,p)$ is the number of active UEs per $QCI$ = qci of a bearer that is a split bearer, and $N_2(i,qci)$ is the number of UEs per $QCI$ = qci of a bearer that is a split bearer and where there exist L2 DL buffer data at the sampling point i.

In this embodiment, when the related parameter is above parameter 2) number of active UEs in the UL per QCI, Formula (3) may be used to determine the number of active UEs in the UL per QCI of a bearer that is not a split bearer, and Formula (4) may be used to determine the number of active UEs in the UL per QCI of a bearer that is a split bearer.

$$M_3(T,qci,p) = \left\lfloor \frac{\sum_{\forall i} N_3(i,qci)}{I_3(T,p)} \right\rfloor \qquad (3),$$

$$M_4(T,qci,p) = \left\lfloor \frac{\sum_{\forall i} N_4(i,qci)}{I_4(T,p)} \right\rfloor \qquad (4);$$

where, $M_3(T,qci,p)$ is the number of active UEs per $QCI$ = qci of a bearer that is not a split bearer, $N_3(i,qci)$ is the number of UEs per $QCI$ = qci of a bearer that is not a split bearer and where there exist L2 UL buffer data at the sampling point i, $M_4(T,qci,p)$ is the number of active UEs per $QCI$ = qci of a bearer that is a split bearer, and $N_4(i,qci)$ is the number of UEs per $QCI$ = qci of a bearer that is a split bearer and where there exist L2 UL buffer data at the sampling point i.

In above formulae (1)-(4), $I_1(T,p)$ to $I_4(T,p)$ refer to a total number of sampling points within a time $T$, and $p$ is a sampling interval.

It can be seen from the above embodiment that by respectively measuring the number of active UEs of a bearer that is not a split bearer and the number of active UEs of a bearer that is a split bearer, that is, performing corresponding measurement according to a situation of the split bearer, accurate L2 measurement may be performed in a dual-connectivity scenario where there exists a split bearer, thereby providing efficient support to network administration and maintenance.

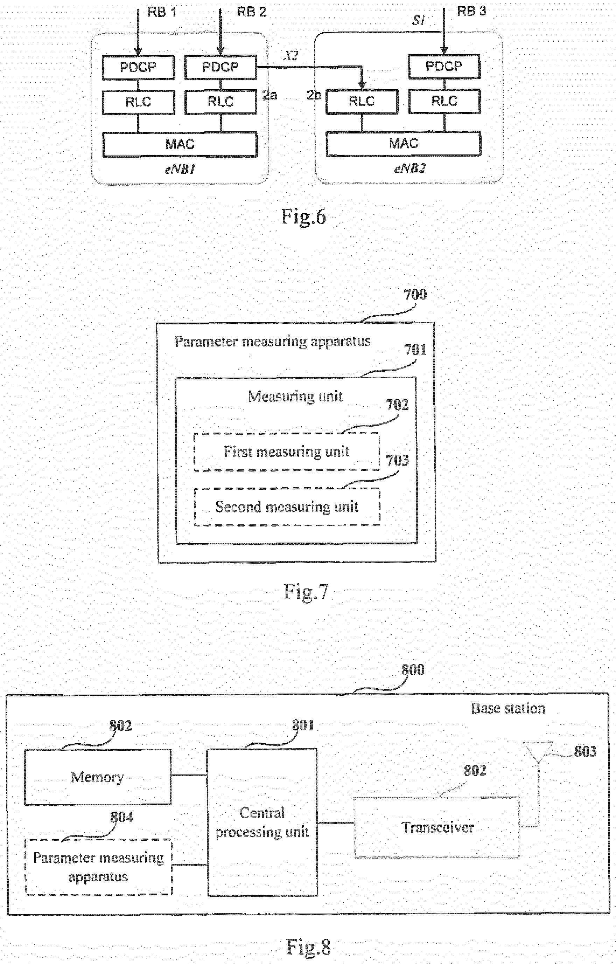

Following description is given taking scenarios shown in FIG 5 and FIG 6 as examples.

FIG 5 is a schematic diagram of a systematic structure of the communication system of Embodiment I of the present disclosure. As shown in FIG. 5, the communication system includes multiple UEs, such as UE1, UE2 and UE3, and at least two base stations (such as eNBs), such as including two base stations, a first base station (such as an eNB) and a second base station (such as an eNB), which are denoted by eNB1 and eNB2.

In this embodiment, UE1 is connected to eNB1 in a conventional manner (a single connectivity manner), and its corresponding bearer is an RB1; UE3 is connected to eNB2 in a conventional manner (a single connectivity manner), and its corresponding bearer is an RB3; and UE2 is connected to eNB1 and eNB2 in a dual-connectivity manner, and its corresponding split bearer is an RB2, a part of the split bearer RB2 corresponding to the first eNB being referred to as a part of a first cell group, i.e. a part of a cell group composed of serving cells associated with the first base station, and a part of the split bearer RB2 corresponding to the second base station being referred to as a part of a second cell group, i.e. a part of a cell group composed of serving cells associated with the second base station, which are denoted by 2a and 2b, respectively.

For example, referring to FIG 2, a base station (such as an eNB) keeping an S1-MME interface with a mobility management entity (MME) is referred to as a master eNB (MeNB), serving cells associated with the MeNB composing a master cell group (MCG), and another base station (such as an eNB) used for providing extra radio resources is referred to as a secondary eNB (SeNB), correspondingly, serving cells associated with the SeNB composing a secondary cell group (SCG). In this embodiment, when eNB1 is an MeNB and eNB2 is an SeNB, parts of split bearer RB2 respectively corresponding to the MeNB and the SeNB are respectively referred to as a part of the MCG and a part of the SCG, which are 2a and 2b, respectively, and vice versa. For example, RB1, RB2 and RB3 have identical QCIs. Following description is given taking that eNB1 is an MeNB and eNB2 is an SeNB as examples.

FIG 6 is a schematic diagram of a protocol stack architecture corresponding to FIG 5. As shown in FIG 6, RB1 is a bearer of UE1 connected to eNB1 in a single connectivity manner, RB3 is a bearer of UE3 connected to eNB2 in a single connectivity manner, and RB2 is a split bearer of UE2 connected to eNB1 and eNB2 in a dual-connectivity manner, which includes the part of the MCG and the part of the SCG, which are referred to as 2a and 2b, respectively.

In scenarios shown in FIG 5 and FIG. 6, regarding above parameters 1) and 2), eNB1 respectively counts the number of UEs per QCI of a bearer that is not a split bearer (i.e. UE connected in a single connectivity manner, such as UE1), and the number of UEs per QCI of a bearer that is a split bearer (i.e. UE connected in a dual-connectivity manner, such as UE2).

Likewise, eNB2 respectively counts the number of UEs per QCI of a bearer that is not a split bearer (i.e. UE connected in a single connectivity manner, such as UE1), and the number of UEs per QCI of a bearer that is a split bearer (i.e. UE connected in a dual-connectivity manner, such as UE2).

In measuring above parameter 1) by eNB1 and eNB2, above formulae (1) and (2) may be used, and in measuring above parameter 2), above formulae (3) and (4) may be used.

The above description is given to a case where the system shown in FIG 5 includes two base stations (such as eNBs) and three UEs, and a parameter measuring method for a case where a system includes more than two base stations and more than three UEs is similar to this method, which shall not be described herein any further.

Embodiment 2

Embodiment 2 of the present disclosure provides a parameter measuring method, including: excluding or not excluding measurement of a split bearer when a related parameter is measured by a base station.

It can be seen from the above embodiment the measurement is performed by excluding or not excluding measurement of the split bearer, accurate measurement may be performed in a dual-connectivity scenario where there exists a split bearer, thereby providing efficient support to network administration and maintenance.

In this embodiment, when the measurement of the split bearer is excluded, measurement of a part of the split bearer may be excluded, or measurement of all parts of the split bearer may be excluded, for example,

1) excluding measurement of a part of the split bearer belonging to a master cell group (MCG) or a part belonging to a secondary cell group (SCG); for example, for the system shown in FIG 5, eNB1 does not measure the part of the SCG, and eNB2 does not measure the part of the MCG; and

2) excluding measurement of a part of the split bearer belonging to the MCG and a part belonging to the SCG; for example, both eNB1 and eNB2 do not measure the parts of the MCG and the SCG.

In this embodiment, when the measurement of the split bearer is not excluded, the parts belonging to the MCG and the SCG are measured, respectively or uniformly.

In this embodiment, in a case where exists a split bearer, the base station may measure the related parameter by using any one of the above manners, and the measurement manners used by different base stations may be identical or different.

Measurement of the above parameters 3)-8) shall be described below with reference to the scenarios shown in FIG 5 and FIG. 6.

I. Parameter 3) packet delay in the DL per QCI

Example1: measurement of the split bearer is excluded by both eNB1 and eNB2, that is, both eNB1 and eNB2 do not measure RB2 (such as the parts 2a and 2b), and only measure RB1 and RB3, respectively.

Example 2: eNB1 excludes the measurement of the part in the split bearer belonging to the SCG, and eNB2 excludes the measurement of the parts belonging to the MCG and the SCG in the split bearer.

As shown in FIG. 5 and FIG. 6, eNB1 measures RB1 and the part of the MCG of RB2 (2a), and eNB2 measures RB3 only and does not measure RB2 (such as the parts 2a and 2b).

Example 3: measurement of the split bearer is not excluded by eNB1, such as measuring the parts in RB2 belonging to the MCG and the SCG, and measurement of the split bearer is excluded by eNB2.

As shown in FIG 5 and FIG 6, eNB1 measures RB1 and 2a and 2b of RB2 (respectively or uniformly), and eNB2 measures RB3, and does not measure RB2 (such as the parts 2a and 2b).

In such a case, when eNB1 measures the part 2b of RB2, it needs to obtain from eNB2 receiving status information on whether a packet is correctly received.

Example 4: eNB1 excludes the measurement of the part in the split bearer belonging to the SCG, and eNB2 excludes the measurement of the part in the split bearer belonging to the MCG

As shown in FIG 5 and FIG. 6, eNB1 measures RB1 and the part 2a of RB2, and eNB2 measures RB3 and the part 2b of RB2.

In such a case, when eNB2 measures the part 2b of RB2, it measures that an arrival reference point of a packet is an upper service access point (SAP) of an RLC layer, the SAP referring to an SAP between the RLC and its upper layer, and delay measurement of the part 2b by eNB2 may further include measurement of X2 delay.

In this embodiment, any existing method may be used to measure the packet delay in the DL per QCI. For example, the packet delay in the DL per QCI may be measured by using Formula (5) below:

$$M_5(T, qci) = \left\lceil \frac{\sum_{\forall i} tAck(i) - tArriv(i)}{I(T)} \right\rceil \tag{5}.$$

In this embodiment, in the above examples 1-3, when eNB1 and eNB2 perform the measurement, the arrival reference point of the packet is an upper service access point (SAP) of a PDCP layer; and in above example 4, when eNB1 performs the measurement, the arrival reference point of the packet is the upper SAP of the PDCP layer; and when eNB2 performs the measurement, the arrival reference point of the packet is the upper SAP of the RLC layer; a reference point of success reception of the packet is a lower service access point (SAP) of an MAC layer, $M_5(T, qci)$ is a statistics of the packet delay in the DL per QCI within a time period T, $tArriv(i)$ is an arrival time of the packet, $tAck(i)$ is an SDU receiving time obtained according to received HARQ feedback information, i is an SDU, and $I(T)$ is a total number of packets. For example, the above packets may be SDUs. The SDUs are different as the reference points are different, that is, when a reference point is an upper SAP of a PDCP layer, the SDU is a PDCU SDU, and when a reference point is an upper SAP of an RLC layer, the SDU is an RLC SDU.

II. Parameter 4) packet loss rate in the DL per QCI

Example1: measurement of the split bearer is excluded by both eNB1 and eNB2, that is, both eNB1 and eNB2 do not measure RB2 (such as the parts 2a and 2b), and only measure RB1 and RB3, respectively.

Example 2: eNB1 excludes the measurement of the part in the split bearer belonging to the SCG, and eNB2 excludes the measurement of the parts belonging to the MCG and the SCG in the split bearer.

As shown in FIG 5 and FIG 6, eNB1 measures RB1 and the part of the MCG of RB2 (2a), and eNB2 measures RB3 only and does not measure RB2 (such as the parts 2a and 2b).

Example 3: measurement of the split bearer is not excluded by eNB1, such as measuring the parts in RB2 belonging to the MCG and the SCG (2a and 2b), and measurement of the split bearer is excluded by eNB2.

As shown in FIG 5 and FIG 6, eNB1 measures RB1 and 2a and 2b of RB2 (respectively or uniformly), and eNB2 measures RB3, and does not measure RB2 (such as the parts 2a and 2b).

In this embodiment, the measurement of the part 2b by eNB1 needs to obtain from eNB2 packet loss information, such as the number of packets lost within a period of time. For example, eNB2 may be triggered by an event, or may periodically transmit the packet loss information to eNB1, so that eNB1 obtains the packet loss information. For example, for a case of being triggered by an event, eNB1 transmits a request to eNB2, indicating eNB2 to transmit to it packet loss information of a bearer of the 2b type; or when the number of lost packets or a loss rate of a bearer of the 2b type reaches a threshold, eNB2 transmits packet loss information to eNB1, or the eNB2 transmits packet loss information of a bearer of the 2b type to eNB1 at a certain period.

Example 4: eNB1 excludes the measurement of the part in the split bearer belonging to the SCG, and eNB2 excludes the measurement of the part in the split bearer belonging to the MCG

As shown in FIG 5 and FIG 6, eNB1 measures RB1 and the part 2a of RB2, and eNB2 measures RB3 and the part 2b of RB2.

In this embodiment, the method may further include: respectively measuring the part (2b) of the SCG of the split bearer and another bearer (such as RB3) by eNB2, that is, eNB2 respectively measures and counts 2b and RB3, maintaining a statistical value for 2b, and maintaining a statistical value for RB3.

As shown in FIG 5 and FIG 6, eNB1 measures RB1 and 2a, and eNB2 measures RB3 and 2b, which perform the measurement respectively. In order to carry out the method, for the measurement of 2b, the arrival reference point of the packet measured by eNB2 is the upper SAP of the RLC layer.

In this embodiment, any existing method may be used to measure the packet loss rate in the DL per QCI. For example, the packet loss rate in the DL per QCI may be measured by using Formula (6) below:

$$M_6(T,qci) = \left\lfloor \frac{Ddisc(T,qci)*1000000}{N(T,qci)} \right\rfloor \qquad (6).$$

In this embodiment, in the above examples 1-3, when eNB1 and eNB2 perform the measurement, the reference point is an upper SAP of a PDCP layer, the upper SAP of a PDCP layer referring to an SAP between the PDCP layer and an upper layer interface; and in the example 4, when eNB1 performs the measurement, the reference point is the upper SAP of the PDCP layer; and when eNB2 performs the measurement, the reference point is the upper SAP of the RLC layer; $M_6(T,qci)$ is a statistic of the packet loss rate within the time period T, $Ddisc(T,qci)$ is a packet that is lost but not transmitted in an air interface, $N(T,gci)$ is the number of total arrived DL packets. For example, the above packets may be SDUs. The SDUs are different as the reference points are different, that is, when a reference point is an upper SAP of a PDCP layer, the SDU is a PDCU SDU, and when a reference point is an upper SAP of an RLC layer, the SDU is an RLC SDU.

III. Parameter 5) packet Uu loss rate in the DL per QCI

Example1: measurement of the split bearer is excluded by both eNB1 and eNB2, that is, both eNB1 and eNB2 do not measure RB2 (such as the parts 2a and 2b), and only measure RB1 and RB3, respectively.

Example 2: eNB1 excludes the measurement of the part in the split bearer belonging to the SCG, and eNB2 excludes the measurement of the parts belonging to the MCG and the SCG in the split bearer.

As shown in FIG 5 and FIG 6, eNB1 measures RB1 and the part of the MCG of RB2 (2a), and eNB2 measures RB3 only and does not measure RB2 (such as the parts 2a and 2b).

Example 3: measurement of the split bearer is not excluded by eNB1, such as measuring the parts in RB2 belonging to the MCG and the SCG (2a and 2b), and measurement of the split bearer is excluded by eNB2.

As shown in FIG. 5 and FIG 6, eNB1 measures RB1 and 2a and 2b of RB2 (respectively or uniformly), and eNB2 measures RB3, and does not measure RB2 (such as the parts 2a and 2b).

In this embodiment, the measurement of the part 2b by eNB1 needs to obtain from eNB2 packet loss information, such as the number of packets lost within a period of time. For example, eNB2 may be triggered by an event, or may periodically transmit the packet loss information to eNB1, so that eNB1 obtains the packet loss information. For example, for a case of being triggered by an event, eNB1 transmits a request to eNB2, indicating eNB2 to transmit to it packet loss information of a bearer of the 2b type; or when the number of lost packets or a loss rate of a bearer of the 2b type reaches a threshold, eNB2 transmits packet loss information to eNB1, or the eNB2 transmits packet loss information of a bearer of the 2b type to eNB1 at a certain period.

In this embodiment, any existing method may be used to measure the packet Uu loss rate in the DL per QCI. For example, the packet Uu loss rate in the DL per QCI may be measured by using Formula (7) below:

$$M_7(T,qci) = \left\lfloor \frac{Dloss(T,qci)*1000000}{N(T,qci)+Dloss(T,qci)} \right\rfloor \qquad (7).$$

where, the above packet refers to a PDCP SDU, $M_7(T,qci)$ refers to a statistic of the packet loss rate within the time period T, $Dloss(T,qci)$ refers to the number of packets that have been transmitted in an air interface but the transmission fails, and $N(T,qci)$ refers to the number of packets that have been transmitted in an air interface and the transmission succeeds.

IV. Parameter 6) packet loss rate in the UL per QCI

Example1: measurement of the split bearer is excluded by both eNB1 and eNB2, that is, both eNB1 and eNB2 do not measure RB2 (such as the parts 2a and 2b), and only measure RB1 and RB3, respectively.

Example 2: eNB1 excludes the measurement of the part in the split bearer belonging to the SCG, and eNB2 excludes the measurement of the parts belonging to the MCG and the SCG in the split bearer.

As shown in FIG. 5 and FIG. 6, eNB1 measures RB1 and the part of the MCG of RB2 (2a), and eNB2 measures RB3 only and does not measure RB2 (such as the parts 2a and 2b).

Example 3: measurement of the part in the split bearer belonging to the SCG is excluded by eNB1, and measurement of the part in the split bearer belonging to the MCG by eNB2.

As shown in FIG 5 and FIG. 6, eNB1 measures RB1 and 2a of RB2 (respectively or uniformly), and eNB2 measures RB3 and 2b of RB2.

In this embodiment, the method may further include: respectively measuring the part (2b) of the SCG of the split bearer and another bearer (such as RB3) by eNB2, that is, eNB2 respectively measures and counts 2b and RB3, maintaining a statistic for 2b, and maintaining a statistic for RB3.

In this embodiment, eNB1 measures RB1 and 2a, and eNB2 measures RB3 and 2b, which perform the measurement respectively. In order to carry out the method, for the measurement of 2b, the reference point of the packet measured by eNB2 is the upper SAP of the RLC layer.

In this embodiment, any existing method may be used to measure the packet loss rate in the UL per QCI. For example, the packet loss rate in the UL per QCI may be measured by using Formula (8) below:

$$M_8(T, qci) = \left\lfloor \frac{Dloss(T, qci) * 1000000}{N(T, qci)} \right\rfloor \qquad (8).$$

In this embodiment, in the examples 1-2, when eNB1 and eNB2 perform the measurement, the reference point is an upper SAP of a PDCP layer; in the example 3, when eNB1 performs the measurement, the reference point is an upper SAP of a PDCP layer; and when eNB2 performs the measurement, the reference point is the upper SAP of the RLC layer; $M_8(T, qci)$ is a statistic of the packet loss rate within the time period T, $Dloss(T, gci)$ is the number of serial numbers of lost UL packets, $N(T, qci)$ is a difference between serial numbers of a first received packet and a last received packet. For example, the above packets refer to SDUs. The SDUs are different as the reference points are different, that is, when a reference point is an upper SAP of a PDCP layer, the SDU is a PDCU SDU, and when a reference point is an upper SAP of an RLC layer, the SDU is an RLC SDU.

V. Parameters 7) and 8) scheduled IP throughput in DL and UL

Example1: measurement of the split bearer is excluded by both eNB1 and eNB2, that is, both eNB1 and eNB2 do not measure RB2 (such as the parts 2a and 2b), and only measure RB1 and RB3, respectively.

Example 2: eNB1 excludes the measurement of the part in the split bearer belonging to the SCG, and eNB2 excludes the measurement of the parts belonging to the MCG and the SCG in the split bearer.

As shown in FIG 5 and FIG 6, eNB1 measures RB1 and the part of the MCG of RB2 (2a), and eNB2 measures RB3 only and does not measure RB2 (such as the parts 2a and 2b).

Example 3: measurement of the split bearer is not excluded by eNB1, such as measuring the parts in RB2 belonging to the MCG and the SCG (2a and 2b), and measurement of the split bearer is excluded by eNB2.

As shown in FIG 5 and FIG 6, eNB1 measures RB1 and 2a and 2b of RB2 (respectively or uniformly), and eNB2 measures RB3, and does not measure RB2 (such as the parts 2a and 2b).

In this embodiment, the measurement of the part 2b by eNB1 needs to obtain from eNB2 data receiving information, such as the number of RLC SDU bits that are acknowledged to be successfully received within a period of time. For example, eNB2 may be triggered by an event, or may periodically transmit the data receiving information to eNB1, so that eNB1 obtains the data receiving information. For example, for a case of being triggered by an event, eNB1 transmits a request to eNB2, indicating eNB2 to transmit to it data receiving information of a bearer of the 2b type; or when the number of pieces of data receiving information of a bearer of the 2b type reaches a threshold, eNB2 transmits data receiving information to eNB1, or the eNB2 transmits data receiving information of a bearer of the 2b type to eNB1 at a certain period.

In this embodiment, any existing method may be used to measure the scheduled IP throughput in DL and UL. For example, the scheduled IP throughput in DL and UL may be measured by using Formula (9) below:

$$\text{If} \sum \text{ThpTimeDl} > 0, \quad \frac{\sum \text{ThpVolDl}}{\sum \text{ThpTimeDl}} \times 1000 \, [\text{kbits/s}]$$

$$\text{If} \sum \text{ThpTimeDl} = 0, \quad 0 \, [\text{kbits/s}]$$

$$(9).$$

where, the data amount refers to the number of RLC SDU bits, a reference point of correctly receiving data is an upper SAP of an MAC layer, *ThpTimeDl* is a data transmission time, and *ThpVolDl* is a size of a data amount of a data stream.

It can be seen from the above embodiment that by performing corresponding measurement by excluding or not excluding a split bearer, that is, corresponding measurement is performed according to a situation of the split bearer, which enables accurate L2 measurement to be performed in a dual-connectivity scenario where there exists a split bearer, thereby providing efficient support to network administration and maintenance.

Embodiment 3

FIG. 7 is a schematic diagram of a structure of the parameter measuring apparatus of Embodiment 3 of the present disclosure. As shown in FIG 7, the apparatus 700 includes a measuring unit 701, which does not exclude measurement of a split bearer in measuring a related parameter.

It can be seen from the above embodiment that by performing corresponding measurement according to a situation of the split bearer, an accurate measurement result may be obtained, thereby providing efficient support to network administration and maintenance.

In this embodiment, when the measurement of the split bearer is not excluded, a base station respectively measures the related parameter of a bearer per QCI that is not a split bearer and the related parameter of a bearer per QCI that is a split bearer.

For example, when the related parameter is the above parameter 1) or 2), different measurement units may be used to measure the related parameters of a split bearer and a non-split bearer. Hence, in this embodiment, as shown in FIG 7, the measuring unit 701 may include a first measuring unit 702 and a second measuring unit 703;for example, the first measuring unit 702 is configured to measure the number of active UEs of a bearer per QCI that is not a split bearer, and the second measuring unit 703 is configured to measure the number of active UEs of a bearer per QCI that is a split bearer.

In this embodiment, formulae (1) and (2), (3) and (4), in Embodiment 1 may be used to measure the number of active UEs in DL and UL, which shall not described herein any further.

It can be seen from the above embodiment that by respectively measuring the number of active UEs that is not a split bearer and the number of active UEs that is a split bearer, that is, corresponding measurement is performed according to a situation of the split bearer, accurate L2 measurement is enabled to be performed in a dual-connectivity scenario where there exists a split bearer, thereby providing efficient support to network administration and maintenance.

Embodiment 4

Embodiment 4 of the present disclosure further provides a parameter measuring apparatus, including: a measuring unit configured to exclude or not exclude measurement of a split bearer when a base station measures a related parameter.

It can be seen from the above embodiment the measurement is performed by excluding or not excluding measurement of the split bearer, accurate measurement may be performed in a dual-connectivity scenario where there exists a split bearer, thereby providing efficient support to network administration and maintenance.

In this embodiment, when the measurement of the split bearer is excluded, the measuring unit may exclude measurement of a part of the split bearer, or may exclude measurement of all parts of the split bearer, for example,

1) excluding measurement of a part of the split bearer belonging to a master cell group (MCG) or a part belonging to a secondary cell group (SCG); for example, for the system shown in FIG 5, eNB1 does not measure the part of the SCG, and eNB2 does not measure the part of the MCG; and

2) excluding measurement of a part of the split bearer belonging to the MCG and a part belonging to the SCG; for example, both eNB1 and eNB2 do not measure the parts of the MCG and the SCG.

In this embodiment, when the measurement of the split bearer is not excluded, the parts belonging to the MCG and the SCG are measured, respectively or uniformly.

In this embodiment, in a case where exists a split bearer, the measuring unit may measure the related parameter by using any one of the above manners, and the measurement manners used by measuring units of different base stations may be identical or different.

In this embodiment, manners of the measuring unit for measuring the above parameters 3)-8) are as described in Embodiment 2, the contents of which being incorporated herein, which shall not be described herein any further.

It can be seen from the above embodiment the measurement is performed by excluding or not excluding measurement of the split bearer, that is, corresponding measurement is performed according to a situation of the split bearer, accurate measurement of L2 may be performed in a dual-connectivity scenario where there exists a split bearer, thereby providing efficient support to network administration and maintenance.

Embodiment 5

Embodiment 5 of the present disclosure further provides a base station (such as an eNB), including the parameter measuring apparatus as described in Embodiment 3 or Embodiment 4, a structure and functions of the parameter measuring apparatus being as described in Embodiment 3 or Embodiment 4, which shall not be described herein any further.

FIG 8 is a schematic diagram of a structure of the base station of Embodiment 5 of the present disclosure. As shown in FIG. 8, the base station 800 may include: a central processing unit (CPU) 801 and a memory 802, the memory 802 being coupled to the central processing unit 801. For example, the memory 802 may store various data, and may further store a program for parameter measurement, and execute the program under control of the central processing unit 801, so as to accurately measure a related parameter in a case where there exists a split bearer.

In an implementation, a function of the parameter measuring apparatus may be integrated into the central processing unit 801. For example, the central processing unit 801 may be configured to: exclude or not exclude measurement of a split bearer when measuring a related parameter.

For example, when the measurement of the split bearer is excluded, measurement of a part belonging to a master cell group or a part belonging to a secondary cell group of the split bearer is excluded.

When the measurement of the split bearer is excluded, measurement of the part belonging to the master cell group and the part belonging to the secondary cell group of the split bearer is excluded.

When the measurement of the split bearer is not excluded, the part belonging to the master cell group and the part belonging to the secondary cell group of the split bearer are measured, respectively or uniformly.

The related parameter is the number of active UE in DL or UL per QCI, and the measurement of the split bearer is not excluded, the number of active UEs that is not a split bearer and the number of active UEs that is a split bearer are measured, respectively.

In another implementation, the parameter measuring apparatus and the central processing unit may be configured separately. For example, the parameter measuring apparatus may be configured as a chip connected to the central processing unit 801, with functions of a measuring apparatus, such as the parameter measuring apparatus 804 shown in FIG. 8, being realized under control of the central processing unit.

Furthermore, as shown in FIG. 8, the base station 800 may further include a transceiver 802 and an antenna 803, etc.; for example, functions of the above component are similar to those in the related art, which shall not be described herein any further. It should be noted that the base station 800 does not necessarily include all the parts shown in FIG 8. And furthermore, the base station 800 may include components not shown in FIG 8, and the related art may be referred to.

It can be seen from the above embodiment the corresponding measurement is performed by respectively measuring the number of active UEs that is not a split bearer and the number of active UEs that is a split bearer, or by excluding or not excluding measurement of the split bearer, that is, corresponding measurement is performed according to a situation of the split bearer, accurate measurement may be performed in a dual-connectivity scenario where there exists a split bearer, thereby providing efficient support to network administration and maintenance.

Embodiment 6

An embodiment of the present disclosure further provides a communication system, including at least two base stations (such as eNBs), and multiple UEs connected to the base stations in a single connectivity manner or a dual connectivity manner; for example, the base stations are configured to measure a related parameter; and measurement of a split bearer is excluded or not excluded when the related parameter is measured by the base stations.

In this embodiment, FIG. 5 may be referred to for the communication system, and structures of the base stations are similar to those in embodiments 3-5, which shall not be described herein any further.

Embodiments 1-5 may be referred to for a method of the base stations for measuring the related parameter, which shall not be described herein any further.

It can be seen from the above embodiment the corresponding measurement is performed by excluding or not excluding measurement of the split bearer, that is, corresponding measurement is performed according to a situation of the split bearer, accurate measurement may be performed in a dual-connectivity scenario where there exists a split bearer, thereby providing efficient support to network administration and maintenance.

An embodiment of the present disclosure further provides a computer-readable program, when the program is executed in a parameter measuring apparatus or a base station, the program enables the computer to carry out the parameter measuring method as described in Embodiment 1 or 2 in the parameter measuring apparatus or the base station.

An embodiment of the present disclosure further provides a storage medium in which a computer-readable program is stored, the computer-readable program enables the computer to carry out the parameter measuring method as described in Embodiment 1 or 2 in a parameter measuring apparatus or a base station.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the principles of the present disclosure, and such variants and modifications fall within the scope of the present disclosure.

**Claims**

1. A parameter measuring apparatus, comprising:

    a measuring unit configured to measure a related parameter; wherein measurement of a split bearer is excluded or not excluded when the related parameter is measured.

2. The apparatus according to claim 1, wherein,
    when the measurement of the split bearer is excluded, the measuring unit excludes measurement of a part belonging to a first cell group or a part belonging to a second cell group of the split bearer;
    and where, the first cell group is composed of serving cells associated with a first base station of two base stations participating in dual connectivity, and the second cell group is composed of serving cells associated with a second base station of the two base stations participating in the dual connectivity.

3. The apparatus according to claim 2, wherein the measuring unit measures other bearers than the split bearer, and a part of the split bearer that is not excluded, respectively.

4. The apparatus according to claim 1, wherein,
    when the measurement of the split bearer is excluded, the measuring unit excludes measurement of a part belonging to the first cell group and a part belonging to the second cell group of the split bearer;
    and where, the first cell group is composed of serving cells associated with a first base station of two base stations participating in dual connectivity, and the second cell group is composed of serving cells associated with a second base station of the two base stations participating in the dual connectivity.

5. The apparatus according to claim 1, wherein,
    when the measurement of the split bearer is not excluded, the measuring unit measures a part belonging to the first cell group and a part belonging to the second cell group in the split bearer, respectively or uniformly;
    and where, the first cell group is composed of serving cells associated with a first base station of two base stations participating in dual connectivity, and the second cell group is composed of serving cells associated with a second base station of the two base stations participating in the dual connectivity.

6. The apparatus according to claim 1, wherein the related parameter is the number of active user equipments (UEs) in the (downlink) DL or (uplink) UL per QCI;
    when the measurement of the split bearer is not excluded, the measuring unit measures the number of active UEs not belonging to the split bearer and the number of active UEs belonging to the split bearer, respectively.

7.  A base station, comprising the parameter measuring apparatus as claimed in claim 1.

8.  A communication system, comprising at least two base stations, and multiple UEs connected to the base stations in a single connectivity manner or a dual connectivity manner; where, the base stations are configured to measure a related parameter; and where measurement of a split bearer is excluded or not excluded when the related parameter is measured by the base stations.

9.  The communication system according to claim 8, wherein when the measurement of the split bearer is excluded, the base stations exclude measurement of a part belonging to a first cell group or a part belonging to a second cell group of the split bearer;
    and wherein, the first cell group is composed of serving cells associated with a first base station of the two base stations participating in dual connectivity, and the second cell group is composed of serving cells associated with a second base station of the two base stations participating in the dual connectivity.

10. The communication system according to claim 8, wherein the base stations measure other bearers than the split bearer, and a part of the split bearer that is not excluded, respectively.

11. The communication system according to claim 8, wherein when the measurement of the split bearer is excluded, the base stations exclude measurement of a part belonging the first cell group and a part belonging to the second cell group of the split bearer;
    and wherein, the first cell group is composed of serving cells associated with the first base station of the two base stations participating in dual connectivity, and the second cell group is composed of serving cells associated with the second base station of the two base stations participating in the dual connectivity.

12. The communication system according to claim 8, wherein when the measurement of the split bearer is not excluded, the base stations measure a part belonging to the first cell group and a part belonging to the second cell group in the split bearer, respectively or uniformly;
    and where, the first cell group is composed of serving cells associated with the first base station of the two base stations participating in dual connectivity, and the second cell group is composed of serving cells associated with the second base station of the two base stations participating in the dual connectivity.

13. The communication system according to claim 8, wherein the related parameter is the number of active UEs in the DL or UL per QCI;
    and when the measurement of the split bearer is not excluded, the eNBs measure the number of active UE not belonging to the split bearer and the number of active UEs belonging to the split bearer, respectively.

EP 3 125 601 A1

Fig.1

Fig.2

Fig.3

401

The number of active UEs of a bearer per QCI (quality class identifier) that is not a split bearer is measured

402

The number of active UEs of a bearer perQCI (quality class identifier) that is a split bearer is measured

Fig.4

Fig.5

Fig.6

Fig.7

Fig.8

<div align="center">

## INTERNATIONAL SEARCH REPORT

</div>

| | International application No. |
|---|---|
| | **PCT/CN2014/074272** |

**A. CLASSIFICATION OF SUBJECT MATTER**

H04W 24/04 (2009.01) i

According to International Patent Classification (IPC) or to both national classification and IPC

**B. FIELDS SEARCHED**

Minimum documentation searched (classification system followed by classification symbols)

H04W, H04L

Documentation searched other than minimum documentation to the extent that such documents are included in the fields searched

Electronic data base consulted during the international search (name of data base and, where practicable, search terms used)

WPI, EPODOC, CNPAT, CNKI: duallink, respective, bear, dual, connectivity, split, bearer, SeNB, MeNB, measure, parameter

**C. DOCUMENTS CONSIDERED TO BE RELEVANT**

| Category* | Citation of document, with indication, where appropriate, of the relevant passages | Relevant to claim No. |
|---|---|---|
| X | CATT.; "3GPP TSG RAN WG2 Meeting #84, R2-134052"; Analysis on layer 2 measurements considering dual connectivity, 15 November 2013 (15.11.2013), sections 1-2 | 1-13 |
| A | US 2014056243 A1 (INTERDIGITAL PATENT HOLDINGS, INC.), 27 February 2014 (27.02.2014), the whole document | 1-13 |
| A | CN 103313292 A (MARVELL INTERNATIONAL, LTD.), 18 September 2013 (18.09.2013), the whole document | 1-13 |

☐ Further documents are listed in the continuation of Box C.  ☒ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 05 August 2014 (05.08.2014) | **29 September 2014 (29.09.2014)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **YANG, Weiming** Telephone No.: (86-10) **82245269** |
|---|---|

Form PCT/ISA/210 (second sheet) (July 2009)

## INTERNATIONAL SEARCH REPORT
### Information on patent family members

International application No.

**PCT/CN2014/074272**

| Patent Documents referred in the Report | Publication Date | Patent Family | Publication Date |
|---|---|---|---|
| US 2014056243 A1 | 27 February 2014 | WO 2014031989 A1 | 27 February 2014 |
| | | US 2014056278 A1 | 27 February 2014 |
| | | WO 2014031998 A1 | 27 February 2014 |
| CN 103313292 A | 18 September 2013 | None | |

Form PCT/ISA/210 (patent family annex) (July 2009)